# EUROPEAN PATENT APPLICATION

(11) **EP 4 851 883 A1**
(43) Date of publication of application: **09.12.2026**
(21) Application number: 25305816.8
(22) Date of filing: 04.06.2025
(51) Int. Cl.: G06Q 10/06

(54) **METHOD AND SYSTEM FOR GENERATING STRUCTURED PROCESS CREATION FRAMEWORK**

(71) Applicant: Accenture Global Solutions Limited, Dublin 4 (IE)
(72) Inventor: KRISHNAMURTHY, Ramamurthy, 560037 Bangalore (IN); RAVISHANKAR, Krishnan, 560068 Bangalore (IN); PRABHU, Kumble Jayant, 560066 Bangalore (IN); DSOUZA, Jeffson Felix, 560037 Bangalore (IN); ARMANDO, Ezio, 06410 Biot (FR); BROWN, Linda Ann, North Vancouver, V7N 1V1 (CA); OOSTERVELD, Wouter Gerardus, 2024TK Haarlem (NL); HENNINGS, Jay Jeffrey, Liberty, 64068 (US); GENTILI, Enrico, 06270 Villeneuve-Loubet (FR); FRESNEAU, Alan, 75011 Paris (FR); SEKHAR, Rakesh Chandra, 560108 Bangalore (IN); YADAV, Inderpal Santlal, 122505 Gurugram, Haryana, Pin (IN); KUMAR, Shubham, 801505 Patna, Bihar (IN); BANERJEE, Partha Pratim, 700028 Kolkata (IN)
(74) Representative: Müller-Boré & Partner Patentanwälte PartG mbB

(57) **Abstract**

A method and system for generating a structured process creation framework is disclosed. The method includes receiving a request for a service delivery. The method further includes generating by using predefined templates and structured metadata models, scaffolding including a structured foundation for creating a process and a plurality of process deliverables corresponding to the requested service delivery. Further, a first set of inputs for a plurality of process attributes and a second set of inputs for the plurality of process deliverables are received. The method further includes transforming the plurality of process attributes and the plurality of process deliverables into object-oriented entities. The object-oriented entities are validated and consequently, the method includes generating, the structured process creation framework for publishing the process and the plurality of process deliverables. The published process and the plurality of published process deliverables provide common unifying language for the requested service delivery.

## Description

### TECHNICAL FIELD

Various examples described herein relate generally to method and system for generating a structured process creation framework. Specifically, disclosed examples are directed to method and system for generating the structured process creation framework, using Generative Artificial Intelligence (GenAI) and Machine Learning (ML) techniques.

### BACKGROUND

Organizations often implement various different methodologies, each with its own nomenclature, deliverables, and governance. The multiplicity of the different methodologies, with their diverse deliverables and activities across different services, results in a lack of consistency in how end-to-end solutions are developed and delivered across organizational services.

### SUMMARY

Implementations of the present disclosure are generally directed to generating a structured process creation framework. More particularly, implementations of the present disclosure are directed to method and system for generating the structured process creation framework, using Generative Artificial Intelligence (GenAI) and Machine Learning (ML) techniques.

**In** general, innovative aspects of the subject matter described herein provide a method and a system for generating a structured process creation framework. The method may include receiving a request for a service delivery. The method may include generating, by using predefined templates and structured metadata models, scaffolding including a structured foundation for creating a process and a plurality of process deliverables corresponding to the requested service delivery. The method may further include receiving a first set of inputs for a plurality of process attributes associated with the process. Additionally, the method may include receiving a second set of inputs for the plurality of process deliverables. The method may further include transforming the plurality of process attributes and the plurality of process deliverables into object-oriented entities. Thereafter, the method may include performing, by using rule-based engines and quality assurance content workflows, validation of the object-oriented entities. Consequently, the method may include generating, based upon successful validation of the object-oriented entities and approval, the structured process creation framework for publishing the process and the plurality of process deliverables corresponding to the requested service delivery. Herein, the published process and the plurality of published process deliverables may provide common unifying language for the requested service delivery. The published process and the plurality of published process deliverables may be dynamically updated and stored in a database with respective index values for dynamic retrieval.

The present disclosure further describes a system for implementing the method provided herein. The present disclosure also describes non-transitory processor-readable storage medium coupled to one or more hardware processors and having instructions stored thereon which, when executed by the one or more hardware processors, cause the one or more hardware processors to perform operations in accordance with the method described herein.

It is appreciated that methods in accordance with the present disclosure can include any combination of the aspects and features described herein. That is, the method in accordance with the present disclosure is not limited to the combinations of aspects and features specifically described herein but also include any combination of the provided aspects and features.

The details of one or more implementations of the present disclosure are set forth in the accompanying drawings and the description below. Other features and advantages of the present disclosure will be apparent from the description and drawings, and from the claims.

### BRIEF DESCRIPTION OF DRAWINGS

Various examples in accordance with the present disclosure will be described with reference to the drawings, in which:
FIG. 1 illustrates an example environment used to execute implementations of the present disclosure.
FIG. 2 illustrates an example architecture of a back-end system disclosed in the example environment of FIG. 1, for generating a structured process creation framework, in accordance with implementations of the present disclosure.
FIG. 3 illustrates a block diagram representing searching of a process, by a crawler, in accordance with implementations of the present disclosure.
FIG. 4 illustrates a flow diagram of an example method for generating the structured process creation framework, by the back-end system, in accordance with implementations of the present disclosure.
FIG. 5 illustrates a computer system that may be used to implement the back-end system disclosed in the example environment of FIG. 1. for generating the structured process creation framework, in accordance with implementations of the present disclosure.

Like reference numbers and designations in the various drawings indicate like elements.

### DETAILED DESCRIPTION

In the following description, various examples are illustrated by way of example and not by way of limitation in the figures of the accompanying drawings. References to various examples in this disclosure are not necessarily to the same example, and such references mean at least one. While specific implementations and other details are discussed, it is to be understood that this is done for illustrative purposes only. A person skilled in the relevant art will recognize that other components and configurations may be used without departing from the scope of the claimed subject matter.

Reference to any "example" (e.g., "for example", "an example of", "by way of example" or the like) are to be considered non-limiting examples regardless of whether expressly stated or not.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any exemplified term. Likewise, the disclosure is not limited to various examples given in this specification.

Without intent to limit the scope of the disclosure, examples of instruments, apparatus, methods, and their related results according to the examples of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions, will control.

The term "comprising" when utilized means "including, but not necessarily limited to"; it specifically indicates open-ended inclusion or membership in the so-described combination, group, series and the like.

The term "a" means "one or more" unless the context clearly indicates a single element.

"First," "second," etc., are labels to distinguish components or blocks of otherwise similar names but does not imply any sequence or numerical limitation.

"And/or" for two possibilities means either or both of the stated possibilities ("A and/or B" covers A alone, B alone, or both A and B take together), and when present with three or more stated possibilities means any individual possibility alone, all possibilities taken together, or some combination of possibilities that is less than all of the possibilities. The language in the format "at least one of A . . . and N" where A through N are possibilities means "and/or" for the stated possibilities (e.g., at least one A, at least one N, at least one A and at least one N, etc.).

It should also be noted that in some alternative implementations, the functions/acts noted may occur out of the order noted in the figures. For example, two steps disclosed or shown in succession may in fact be executed substantially concurrently or may sometimes be executed in the reverse order, depending upon the functionality/acts involved.

Specific details are provided in the following description to provide a thorough understanding of examples. However, it will be understood by one of ordinary skill in the art that examples may be practiced without these specific details. For example, systems may be shown in block diagrams so as not to obscure the examples in unnecessary detail. In other instances, well-known processes, structures, and techniques may be shown without unnecessary detail in order to avoid obscuring details of the examples.

The specification and drawings are to be regarded in an illustrative rather than a restrictive sense. It will, however, be evident that various modifications and changes may be made thereunto without departing from the broader spirit and scope of the invention as set forth in the claims.

Organizations operate with multiple industry specific methodologies. Each methodology may have distinct nomenclatures, deliverables, and governance structures. The organizations may employ mechanisms to create extensive method documentation for managing the multiple methodologies. However, the extensive method documentation may fail to provide a standard framework for the multiple methodologies, which may lead to inconsistencies in how work is structured, sold, and delivered. This lack of the standardized framework further creates inefficiencies, misalignment across teams, and difficulties in scaling best practices.

The extensive method documentation and the lack of standard framework for the multiple methodologies may pose several technical limitations or challenges for the organization. For example,

Non - standard methodologies across the different services: The organizations operate with the multiple methodologies, each using distinct nomenclatures, deliverables, and governance structures. The existence of different multiple methodologies, comprising various deliverables and activities across services, leads to inconsistencies in end-to-end solutioning and delivery.

Lack of standardized content reuse and accessibility: A user in the organizations may struggle to find and reuse relevant methodologies due to scattered, redundant, and inconsistent method documentation. Thus, leading to duplication of effort and inefficiencies.

Slow and manual method creation: Creation of the method documentation may rely on manual efforts, which makes the creation of the method documentation it slow, resource-intensive, and difficult to standardize across different organizational engagements.

Inconsistent information hierarchy: The different methodologies follow varying structures, making it difficult to establish consistency across services and scale new methodologies efficiently.

Manual effort in ensuring compliance & governance: Engagement teams must manually align methodologies with organizational policies, regulatory requirements, and industry best practices, increasing the risk of inconsistencies.

Lack of role-based personalization & knowledge retention: Practitioners struggle to find relevant methodologies based on their role, expertise level, or project context. Additionally, knowledge retention is challenging due to decentralized documentation.

Scalability challenges in business acquisitions: Each new types of engagement introduces additional methodologies, increasing complexity and leading to and inconsistent processes and workflows. The lack of a standardized framework prolongs integration timelines, forcing multi-tower/service projects to develop their own methodologies. This issue worsens with every acquisition, further complicating cross-service collaboration and delivery consistency

Moreover, traditionally, the absence of the common unifying language makes multi-service project execution difficult, causing misalignment across teams, delays, and inconsistencies in governance.

Therefore, with the above-described technical limitations or challenges, a significant amount of time, human resources, and computing resources (e.g., processing resources, memory resources, communication resources, and/or the like) for managing the multiple methodologies.

The present innovation addresses the afore-mentioned technical challenges by integrating all the multiple methodologies under a common unified structure and language by generating a structured process creation framework. The structured process creation framework offers a standardized way to define, implement, and manage multiple methodologies throughout an organization, ultimately guaranteeing consistent, efficient, and repeatable process execution. The present disclosure establishes a single way of working and ensures that every engagement aligns with organizational strategy. For instance, the present innovation overcome the challenge of non - standard methodologies across services by providing the common unifying language for service delivery by a plurality of service teams. The common unifying language consolidates multiple methodologies into a single, structured platform.

Further, to addresses the challenge of lack of standardized content reuse and accessibility, the structured process creation framework in the present innovation is a real-time, structured framework that enables content inheritance, ensuring method reusability.

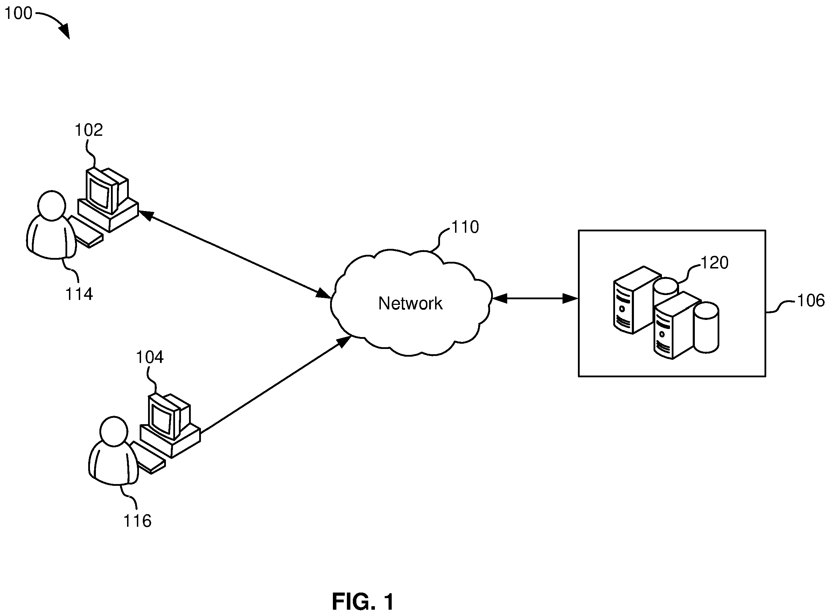

FIG. 1 illustrates an example environment 100 that can be used to execute implementations of the present disclosure. In some examples, the example environment 100 enables users associated with respective systems to execute requests to generate content by invoking a trained language model in accordance with implementations of the present disclosure. The example environment 100 includes computing devices 102 and 104, back-end system 106, and a network 110. In some examples, the computing devices 102 and 104 are used by respective users 114 and 116 to log into and interact with applications executing on the back-end system 106 according to implementations of the present disclosure.

As shown in FIG. 1, the computing devices 102 and 104 are depicted as desktop computing devices. It is contemplated, however, that implementations of the present disclosure can be realized with any appropriate type of computing device (e.g., smartphone, tablet, laptop computer, voice-enabled devices). In some examples, the network 110 includes a local area network (LAN), wide area network (WAN), the Internet, or a combination thereof, and connects web sites (e.g., web applications executing on the back-end system 106), user devices (e.g., the computing devices 102, 104), and the back-end system 106. In some examples, the network 110 can be accessed over a wired and/or a wireless communications link. For example, mobile computing devices, such as smartphones can utilize a cellular network to access the network 110.

While only one back-end system 106 is shown in FIG. 1, there may be more than one back-end system 106, and each of the back-end systems includes at least one server system 120. In some examples, the server system 120 hosts one or more computer implemented services that users 114 and/or 116 can interact with by using the computing devices 102 and/or 104, respectively. For example, components of enterprise systems and applications can be hosted on one or more of the back-end system 106. In some examples, the back-end system 106 can be provided as an on-premises system that is operated by an enterprise or a third-party taking part in cross-platform interactions and data management. In some examples, the back-end system 106 can be provided as an off-premises system (e.g., cloud or on-demand) that is operated by an enterprise or a third party on behalf of an enterprise.

In some examples, the computing devices 102 and 104 each include computer executable applications executed thereon. In some examples, the computing devices 102 and 104 each include a web browser application executed thereon, which can be used to display one or more web pages of applications executing on the back-end system 106. In some examples, each of the computing devices 102 and 104 can display one or more GUIs that enable the respective users 114 and 116 to interact with the back-end system 106. In accordance with implementations of the present disclosure, the back-end system 106 may host enterprise applications or systems that require data sharing and data privacy. In some examples, the computing device 102 and/or the computing device 104 can communicate with the back-end system 106 over the network 110.

In some implementations, the back-end system 106 can be implemented in a cloud environment. The back-end system 106 includes at least one server system (or server) 120. In the example of FIG. 1, the back-end system 106 can include various forms of servers including, but not limited to, a web server, an application server, a proxy server, a network server, and/or a server pool. In general, server systems accept requests for application services and provide such services to any number of client devices (for example, the computing device 102 over the network 110).

In some implementations, the back-end system 106 can be used for generating the structured process creation framework. Various examples, depicting generating the structured process creation framework, are described in detail in conjunctions with figures below.

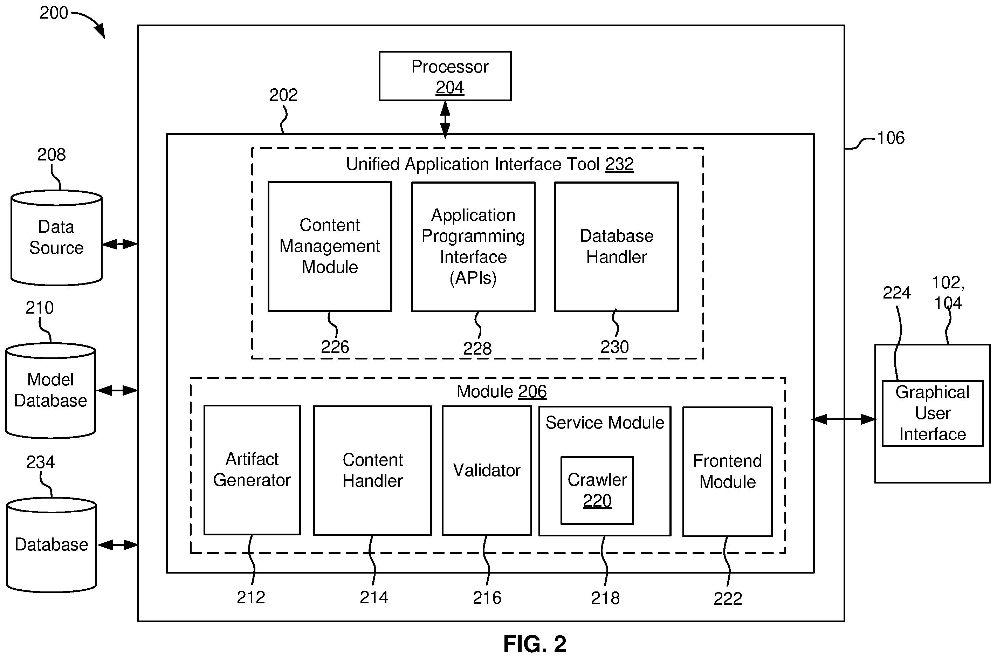

FIG. 2 illustrates an example architecture 200 of the back-end system 106 for generating the structured process creation framework, in accordance with implementations of the present disclosure. The back-end system 106 system may be referenced as an application server for generating the structured process creation framework. The back-end system 106 may include one or more non-transitory processor-readable medium (herein referenced as memory) 202 storing instructions to be executed by the one or more hardware processors 204. In the back-end system 106, the one or more hardware processors 204 may be communicably coupled with the memory 202 and configured to execute the machine executable instructions to perform operations according to the present disclosure. In some examples, the one or more hardware processors 204 may include, but not limited to, microprocessors, microcomputers, hardware processors, microcontrollers, digital signal processors, central processing units, state machines, logic circuits, Application Specific Integrated Circuits (ASICs), Field Programmable Gate Arrays (FPGAs), and/or any devices that manipulate data or signals based on operational instructions. Among other capabilities, the one or more hardware processors 204 may be programmed to cooperate with non-transitory processor-readable instructions stored in the memory 202 for performing operations according to the present disclosure. The memory 202 may be non-transitory or non-volatile medium, such as a magnetic disk or solid-state non-volatile memory or volatile medium such as Random Access Memory (RAM), and/or the like.

In some examples, the memory 202 may include modules 206 and unified application interface tool 232, in the form of programmable instructions executable by the one or more hardware processors 204. The modules 206 may include an artifact generator 212, a content handler 214, a validator 216, a service module 218 and a frontend module 222. The unified application interface tool 232 may include a content management module 226, application programming interfaces (APIs) 228 and a database handler 230. Moreover, the memory 202 may include a unified application interface tool 232. The unified application interface tool 232 may further include a content management module 226, one or more application programming interfaces (APIs) 228 and a database handler 230. Further, the back-end system 106 may be communicatively coupled to a model database 210. The model database 210 may include one or more LLMs (also be referenced to as GenAI models, foundation models, natural language processing (NLP) models and/or the like). In an implementation, the LLMs may include pre-trained LLMs or generated LLMs. The pre-trained LLMs may be general-purpose GAI models like large deep learning neural networks, which may be trained using a broad range of generalized and unlabelled training data to perform one or more tasks, such as, human computer interactions (e.g., question and answering), automating process execution, process planning, generating step-by-step procedures for the process execution, performing data analysis, and/or the like. While implementations of the present disclosure are described in further detail herein with non-limiting reference to the LLMs, it is contemplated that implementations of the present disclosure may be realized using any appropriate foundation models or Machine Learning (ML) models, or Artificial Intelligence (AI) models.

In an aspect, the artifact generator 212, in the back-end system 106, may receive a request, via a graphical user interface 224, from the computing device (e.g., the computing device 102 or the computing device 104) of the user, for a service delivery. The service delivery may refer to performing a specific type of work or a set of tasks. When a request for a service is received, the service delivery may include executing the underlying technical steps required to fulfill the request received. Specifically, the user may input the request (for example, user identifier, password, or the like), said request may be transmitted to the artifact generator 212, through an hypertext transfer protocol (HTTP) request (e.g., POST). On receiving the request, the artifact generator 212 may extract, and thereafter verify the request against stored user data. The user data may refer to the information directly associated with a specific user within the data source 208, such as user ID (unique identifier). Herein, the data source 208 may include enterprise data stored in database (for example MySQL database). The data in the data source 208 may originate from domain expert elicitation. The data may be gained from domain experts. If the request matches with the stored user data, the user may be authenticated. Upon successful authentication, the the artifact generator 212 may generates a session token (for example a unique ID) and return to the user 114 and/or 116 as a cookie or in the response header. The session token may enable the user 114 and/or 116 to access the application on the back-end system 106, without repeatedly logging in. As would be understood, the user data may be collected, stored, and used based on explicit consent received from the users. Further, the user data may be deleted per regulations and prior consents received from the users. Therefore, implementations of the present disclosure may operate only on the small slice of the user data that the users have consented to and do not operate on a full brain scan worth of data.

Further, in response to the request received, the artifact generator 212may generate scaffolding corresponding to the requested service delivery, by using predefined templates and structured metadata models. The scaffolding may include a structured foundation for creating a process and a plurality of process deliverables. In other words, the artifact generator 212 may automatically create the structured foundation, said structured foundation may refer to a pre-defined structure for the process and the plurality of process deliverables.

In some examples, the pre-defined templates may define the structure and format of the process and the plurality of process deliverables. The pre-defined templates may encapsulate the standard elements, layout, and content which are common across the use-cased of the enterprise. The pre-defined templates may be stored as files in various formats, such as, document templates (e.g., DOCX), spreadsheet templates (e.g., XLSX), markup language templates (e.g., Hypertext Markup Language (HTML), Extensible Markup Language (XML)), or the like. The pre-defined templates may also be represented as structured data within the artifact generator 212, defining the fields and relationships for entities. The structured data may refer to data organized as modular, data-like components. In other words, the structured data may refer to organized content, as a result of categorization of each section based on the purpose. The structured data may enable users to access and develop the content without the help of specialized data scientists or subject matter experts. The structured data may be tagged with metadata, thereby enabling efficient management and reuse. Moreover, the structured data types may facilitate updates and integration across various platforms. In an example of the pre-defined templates, a software requirements specification template may specify sections for functional requirements, non-functional requirements, and use cases.

In some examples, the structured metadata models may define structure and properties of the data associated with the process and the plurality of process deliverables. The structured metadata models may provide a standardized way to describe the data, including the type, format, and relationships. In the artifact generator 212, the structured metadata models may be implemented as entity schemas. The entity schemas may include, but are not limited to, entity types (e.g., "process," "deliverable"), fields (attributes) for each entity type (e.g., "process name," "deliverable type," "due date"), data types for each field (e.g., string, date, integer) and relationships between entities (e.g., a "process" entity can have multiple "deliverable" entities). Herein, the structured metadata models may be represented using structured data formats like JavaScript Object Notation (JSON) or XML). In some examples, the structured metadata models may include process metadata models and deliverable metadata models. In an example, the process metadata model may include attributes like process name (string), process description (text), process stage (taxonomy term from a "process stage" vocabulary), or the like. In another example, the deliverable metadata model may include attributes like deliverable name (string), deliverable type (string), deliverable status (string), deliverable due date (date), deliverable assigned to (entity reference to a "user" entity), or the like.

In some examples, the process may represent a structured set of interconnected activities, logically sequenced to generate a defined suite of deliverables which may collectively realize a specific outcome. The structured sequence of activities may be defined by codified organizational best practices, proprietary techniques, and leveraged tools and assets to ensure operational consistency, effectiveness in achieving the intended outcome, and resource efficiency. Furthermore, the given process may exhibit variations, representing context-specific adaptations or configurations of the core process to accommodate diverse project requirements or factors.

In some examples, the process deliverables may refer to the tangible or intangible output resulting from one or more activities within the defined process. The non-limiting examples may include a completed software application, a user manual or a deployed web service. In other words, the process deliverables may include various outputs needed to complete the project, said process deliverables may include, but not limited to, reports, plans, schedules and intermediate software builds.

In an instance, the plurality of process attributes may define the metadata and characteristics of a project process. The plurality of process attributes may include data fields describing the particular project process. The plurality of process attributes may, further, provide context, specifications, and measurable criteria for the process. The plurality of process attributes may be stored within the content management module 226, which may further be used to generate, validate, and manage the generated scaffolding. Further, the plurality of process attributes may include a process name, a list of process variants, one or more input parameters or arguments of the process, at least one output parameter or deliverable of the process, a set of key considerations, a set of key performance indices, and/or a set of metrics.

In further detail, the process name may refer to unique identifier for the process, for example, "Agile Software Development - Web Application," "Cloud Migration - Infrastructure as a Service," "Business Process Re-engineering - Supply Chain", or the like. The process variants may refer to variations of the base process to adapt to different scenarios or organizational requirements. For example, for the process "Agile Software Development - Web Application," the process variants may be "Agile - Scrum", "Agile - Kanban", "Agile - Hybrid", or the like. The one or more input parameters or arguments of the process may refer to data or resources required to initiate or execute the process. For example, to execute the process "Agile Software Development", the one or more input parameters or arguments may include, but are not limited to, project backlog, user stories, development environment, budget allocation, or the like. The output parameter or deliverable of the process may refer to results or products generated by the process. For example, for the process "Agile Software Development", the output parameter or deliverable of the process may include "working software increment", "sprint review report", "release notes", or the like. The set of key considerations may refer to factors or constraints taken into account during the process. For example, for the process "Cloud Migration", set of key considerations may include, but are not limited to, "data security requirements", "regulatory compliance", "downtime minimization", "legacy system compatibility", or the like. The set of key performance indices may refer to measurable values indicating the progress or success of the process. For example, for the process "Agile Software Development", the set of key performance indices may include, but not limited to, "sprint velocity", "defect density", "customer satisfaction", or the like. in another example, for the process "Cloud Migration", the set of key performance indices may include, but not limited to, "migration completion time", "system performance improvement", "resource savings", or the like. The set of metrics may refer to measurements used to track and analyze the process. For example, for the process "Agile Software Development", the set of metrics may include, but not limited to, "build time", "team productivity", or the like. In another example, for the process "Process Re-engineering", the set of metrics may include, but not limited to, "process cycle time", "error rate", "resource utilization", or the like.

Furthermore, the plurality of process deliverables may include a deliverable name, a list of deliverable variants, a purpose or a reason of a deliverable, any risk and/or mitigation technique corresponding to the deliverable, a set of key performance indices associated with the deliverable, a set of metrics associated with the deliverable, an asset of a tool associated with the deliverable, one or more templates associated with the deliverable, and/or one or more examples corresponding to the deliverable. Herein, the process attributes may define the specific parameters and context of the process, and may determine the requisite process deliverables, including the type and the data to be constructed.

The deliverable name may refer to a unique and descriptive identifier for the deliverable. For example, "Software Requirements Specification," "High-Level Design Document," "User Acceptance Testing Plan," "Deployment Package," "Project Closure Report", or the like. The list of deliverable variants may refer to the different versions or formats, of the base process deliverable, tailored to specific process requirements, methodologies, or user requirements. In an example, for the process deliverable "High-Level Design Document", the list of deliverable variants may include "architectural blueprint", "system context diagram", "technology stack definition" or the like. The purpose or reason of the deliverable may refer to description outlining the objective and intended use of the deliverable within the overall process. In an example, for the process deliverable " User Acceptance Testing Plan", the purpose or reason of the deliverable may outline the strategy, scope, and procedures for verifying that the developed software meets the agreed-upon requirements from the end-user perspective. The risk and/or mitigation technique corresponding to the deliverable may refer to identification of potential risks associated with the creation, quality, or acceptance of the deliverable, along with corresponding strategies to minimize the impact. In an example, for the process deliverable "Deployment Package", the risk may include deployment failure causing system downtime. The mitigation technique to remedy said risk may include implementing a rollback plan, performing thorough testing in a staging environment. The set of key performance indices associated with the deliverable may refer to measurable values used to evaluate the quality, timeliness, or impact of the deliverable. In an example, for the process deliverable "User Acceptance Testing (User Acceptance Testing)", the set of key performance indices may include "Number of Defects Found During UAT", "UAT Sign-off Rate", or the like. The set of metrics associated with the deliverable may refer to measurements used to track characteristics and attributes of the deliverable. In an example, for the process deliverable, "High-Level Design Document", the set of metrics may include "number of architectural components defined", "number of interface specifications", or the like. The asset of the tool associated with the deliverable may refer to specific tools (hardware and/or software) or resources recommended or required for the creation or management of the deliverable. In an example, for the process deliverable "High-Level Design Document", asset of the tool associated with the deliverable may include " Unified Modeling Language (UML) modeling tool (e.g., enterprise architect, Lucidchart)". The one or more templates associated with the deliverable may refer to pre-defined structures or formats serving as a starting point for creating the deliverable, ensuring consistency and completeness. In an example, for the process deliverable, "Software Requirements Specification", the one or more templates may include "IEEE 830 template", "use case specification template", "user story template", or the like. The one or more examples corresponding to the deliverable may refer to previously created, high-quality instances of the deliverable serving as a reference. In an example, access to a repository of well-documented "Software Requirements Specification" documents from similar past projects, illustrating the expected level of detail and format. Moreover, the plurality of process deliverables may provide metadata for each deliverable, facilitating creation, management, and utilization in different processes, across different project contexts and service teams. The plurality of process deliverables may be managed within the content management module 226 as structured data associated with each deliverable type.

In some examples, the artifact generator 212 may combine the pre-defined templates and the structured metadata models to create the pre-structured foundation for the process and the plurality of process deliverables. The artifact generator 212 may select the appropriate pre-defined template based on the type of process or deliverable. The artifact generator 212 may use the metadata model to populate the pre-defined templates with initial data. The populating the pre-defined templates may include, but not limited to, retrieving data from user input, retrieving data from other associated systems and using default values defined in the metadata model.

Once the scaffolding is generated using the pre-defined templates and the structured metadata models, the artifact generator 212 may receive a first set of inputs for the plurality of process attributes associated with the process. Herein, the first set of inputs may further include user-provided data which may define the characteristics of the specific project process being created. For instance, the first set of inputs may be received through user interface elements (e.g., web forms in Drupal) presenting fields corresponding to the plurality of process attributes. The first set of inputs entered by the user may be then stored, within the artifact generator 212, associated with the specific process being scaffolded.

Also, the artifact generator 212 may receive a second set of inputs for the plurality of process deliverables. The second set of inputs may include user-specific information populating the individual process deliverables. For example, for a "requirements specification," the second set of inputs may include functional requirements, non-functional requirements, user stories, or the like. In another example, for a design document, the second set of inputs may include architectural components, data models, interface specifications, and/or the like. Moreover, the artifact generator 212 may receive the first set of inputs and the second set of inputs via a graphical user interface (GUI) 224.

In an aspect, the first set of inputs and the second set of inputs may be submitted by the users 114 and/or 116 via the GUI. The first set of inputs and the second set of inputs may refer to user's 114 and/or 116 request for information. It may be appreciated that the users 114 and/or 116 are shown for illustration purposes only and that 'users' generating the first set of inputs and the second set of inputs in accordance with the disclosed examples can also include applications being executed on the computing devices 102 and/or 104 that automatically generate the first set of inputs and the second set of inputs without intervention from the users 114 and/or 116. The first set of inputs and the second set of inputs may be a string of text formulated by the user 114 and/or 116 to express the required information. In addition to text initiated by the users 114 and/or 116, the first set of inputs and the second set of inputs may be implicitly generated from system events or derived from diverse data sources, encompassing textual input, uploaded files, documents, and multimedia content.

Further, the content handler 214 may receive the first set of inputs and the second set of inputs from the artifact generator 212. The content handler may transmit the received the first set of inputs and the second set of inputs to the content management module 226. The content management module 226 (for example Drupal 10 - PHP 8.2) may be served as a standardized repository for data, said data may include the process and the plurality of process deliverables. Specifically, the content management module 226 may transform and store the first set of inputs and the second set of inputs as object-oriented entities. The transformation of the first set of inputs and the second set of inputs into the object-oriented entities may include defining an entity type, creating an instance of the entity type and mapping the first set of inputs and the second set of inputs to the entity type. The entity type may refer to classification or category used to group the object-oriented entities sharing common characteristics or properties. The entity type may serves as a blueprint or a template for creating individual instances of corresponding entity type, known as entities.

The content management module 226 may define various entity types (e.g., a node for general content, a taxonomy term for categorization, block for UI elements, a paragraph for reusable content components, users for user accounts). Further, for each entity type a schema may be defined, specifying properties (fields) and data types for the properties or fields. Specifically, to define the schema, the content management module 226 may define a structured metadata representation of the entity type. For example, the structured metadata representation may be defined through yet another markup language (YAML) (.yml) files using a directory (e.g., my_module.entity_type.yml, my_module.fields.yml) managed by the content management module 226.

By way of non-limiting example, the schema definition may specify a machine name of the entity type (the unique identifier, e.g., my_custom_process). Further, the schema definition may specifya base class which the entity may extend (providing core entity functionality). Additionally, the schema definition may specify administrative labels and descriptions, along with the base class in the database where the entity may be stored. Moreover, keys, mapping entity properties to database columns (e.g., ID maps to the primary key column), may be specified in the schema definition. Also, links to define standard operations on the entity (e.g., canonical, edit-form, delete-form) may be specified in the schema definition.

Furthermore, the content management module 226 may specify the individual attributes or fields of each entity type, by programmatically (in instructions) or declaratively (in .yml files). For each entity type, the content management module 226 may define machine name (unique within the entity type, e.g., field_process_name), and a field type (e.g., string, integer, boolean, entity_reference, datetime), thereby indicating the way data is stored and rendered. Moreover, the content management module 226 may define cardinality (single or multiple values). Additionally, the content management module 226 may define settings specific to the field type (e.g., allowed values for a list field, target entity type for an entity reference field). Further, the content management module 226 may store the defined fields. The storing may include creating or referencing database tables and defining the schema for each field's storage (column names, data types, indexes).

Once the entity type is defined, the content management module 226 may create the instance of the entity type. In other words, the defined various entity types along with the individual attributes or fields of each entity type may be instantiated. For example, instantiation may refer to creating a new process definition, said instantiation may include instantiating a "node" entity (or a custom entity type if defined). In other words, instantiation may include creating a specific instance (a record) of the defined entity type. Specifically, an action may trigger the creation of the new entity. The action may include a user submitting a form, a programmatic call from another module, or an administrative action.

**In** further detail, data for the entity's fields may be received through user interfaces (forms) or via programmatic API calls. When the user submits a form or an API request is made, the content management module 226, by using entity API, may manage the data processing. Specifically, the, by using entity API, the content management module 226 may perform data sanitization, data validation and data persistence. The data sanitization may include cleaning and preparing the input data to prevent security vulnerabilities.

After defining the entity type and creating the instance of the entity type, the content management module 226 may map the received the first set of inputs and the second set of inputs to said entity type to form the object-oriented entities. Specifically, the object-oriented entities, under specific entity type may provide processes (for example, using instruction like "set() process") to assign values to the corresponding fields (for example: $entity->set('title', $title _value). During the mapping, the content management module 226 may perform data type conversions. For instance, a string from a form field may be converted into a date object before being assigned to a date field. For complex data structures (for example, nested arrays from JSON), the content management module 226 may implement logic to traverse said complex data structure and map the values to the appropriate entity fields, thereby, potentially creating nested entities or lists of values.

Additionally or alternatively, the content management module 226 may be used to pre-validate the object-oriented entities formed from the transformation of the first set of inputs and the second set of inputs, prior to storage. In further detail, the object-oriented entities may be pre-validated, prior to storage in the content management module 226. The content management module 226 may pre-validate the object-oriented entities, thereby, ensuring conformity to the rules defined in the entity schema (e.g., required fields are present, data types are correct, constraints are met). In an aspect, the object-oriented entities may be pre-validated at the form level using field constraints (e.g., required fields, data types) and custom validation hooks like hook_form_alter() or hook_validate() to enforce enterprise logic. In another aspect, automated validation rules are applied via custom modules or the rules engine to ensure compliance with naming conventions, reference integrity, and mandatory taxonomy tagging. Prior to publishing, batch validation scripts and quality analyst (QA) checks may pre-validate content structure, metadata, and layout rendering through staging previews. The pre-validation may be tracked through version control and audit logs, enabling traceability of changes, user actions, and approval history.

The content management module 226 may provide a pre-validation API to check the entity's data. Moreover, pre-validation rules may be defined as constraints on the entity fields. If pre-validation fails, the content management module 226 may generate error messages indicating the invalid data. Once the data is mapped and pre-validated, the object-oriented entities may be stored within the content management module 226 for further processing.

Further, the content management module 226 may categorize the object-oriented entities (e.g., the data) under different processes (for example, Agile, SAFe, Traditional), by utilizing taxonomy techniques, for example, Drupal Taxonomy. For categorizing the object-oriented entities, the content management module 226 may define a taxonomy vocabulary. The taxonomy vocabulary may serve as storage for a set of related terms. For the example provided, a vocabulary named "Process Type" may be created. The creation may include defining a machine name (e.g., process_type), a human-readable name ("Process Type"), and a description. The definition may be stored as part of configurations of the content management module 226. Once the taxonomy vocabulary is created, the content management module 226 may create individual taxonomy terms within the defined vocabulary ("Process Type"). Each taxonomy term may represent a specific category. For example, terms such as "Agile," "SAFe," and "Traditional" may be created under the "Process Type" vocabulary. Each taxonomy term may be assigned with a name, and optionally, a description, a weight for ordering, and hierarchical relationships with other terms within the same vocabulary. The taxonomy terms may be stored as entities. Moreover, for the entities to be categorized (e.g., "Process" content type nodes), a field of the type "Entity reference" may be defined. The field may be configured to specifically reference the taxonomy term, entity type and may be further constrained to the "Process Type" vocabulary. The field may be added to the schema of the content entity type.

Furthermore, the content management module 226 may determine standardized process hierarchies, process deliverable templates, and relationship between the object-oriented entities of respective process and the plurality of process deliverables. Specifically, the content management module 226 may model different levels within the process hierarchy (e.g., phase, stage, task) as distinct content types (node entity types). The different levels may include, but not limited to, phase, stage and task. The phase may refer to related stages in the process hierarchy, representing a defined start and end point. The stage may refer to a set of related activities aimed at achieving a specific outcome. The phase may include several stages. The task may refer to an actionable unit of the process required to be performed within the stage to achieve the stage's objectives. The task may be the smallest units of process hierarchy. Each content type may possess specific fields relevant to its level in the hierarchy. The taxonomy vocabulary with hierarchical capabilities may be used to represent the process stages and substages. Terms within the vocabulary may be arranged in a parent-child relationship. After that, the content management module 226 may determine relationships between hierarchical levels, using entity reference field. For instance, a "Phase" content type may have an entity reference field pointing to multiple "Stage" content type instances. In another example, the "Stage" content type may have an entity reference field pointing to multiple "Task" content type instances. The definitions of the content types, fields, and taxonomies may be stored as configuration within the content management module 226 (e.g., yet another markup language (YAML) files in Drupal). The process deliverable templates (e.g., DOCX, XLSX, PDF files) may be managed as file entities (for example, leveraging a "Media" entity type). The entities may store metadata about the file, such as the name, URI, and MIME type. Each process deliverable template (for instance, a specific content type) may include the entity reference field which points to one or more file entities representing the associated deliverable template(s). Further, the content management module 226 may determine the relationship between the process and the plurality of process deliverables by entity reference fields. For example, the "Process" content type may include a multi-value entity reference field pointing to instances of various process deliverable content types. The entity reference fields may explicitly list the deliverables associated with the specific process. In an aspect, fields on either the "process" or "deliverable" content types may provide further context for the relationship (e.g., a field on the deliverable indicating the process stage it belongs to).

In an aspect, the content management module 226 may implement variant-based method creation to automate content generation by leveraging configurable content types, reusable taxonomies, and structured metadata, based on the object-oriented entities.

Once the first set of inputs and the second set of inputs are transformed into the object oriented entities, the validator 216 may perform validation of the object-oriented entities. The validation may be performed by utilizing rule-based engines and content workflow. A rule-based engine may execute predefined rules against the object-oriented entities. The predefined rules may be defined in a declarative language or format, separate from the application's core code, thereby enabling flexibility and modification of validation logic. The predefined rules may be stored in the memory 202 or the data source 208 by a database handler 230 as configuration files, or a dedicated rule repository. Herein, the rule-based engine may utilize inference mechanism (e.g., forward chaining, backward chaining) to determine the predefined rules applicable and executable to the corresponding actions. Herein, the actions may include generating error messages, rejecting the object-oriented entities/data, modifying the object-oriented entities/data, logging the validation result and triggering other processes in the content workflow. In some examples, the content workflow may refer to a sequence of steps which the object-oriented entities corresponding to the first set of inputs and the second set of inputs, goes through from a receipt to a publication. The content workflow may define the processes, roles, and dependencies involved in managing the object-oriented entities. Additionally, the content workflow may adhere to compliance standards. The compliance standard may refer to a set of rules, policies, or guidelines which the object-oriented entities corresponding to the first set of inputs and the second set of inputs must adhere to. The compliance standards may be legal, regulatory, or organizational.

In further detail, the validator 216 may perform data integrity checks on the object-oriented entities, thereby maintaining data quality, consistency, and preventing errors in the generated scaffolding. For performing the data integrity checks, the validator 216 may define a formal schema for the object-oriented entities. The schema may specify the expected data type for each object-oriented entity (for example, string, integer, boolean, date, or the like), the format (for example, email, phone number, specific date format, or the like), and the applicable constraints. The constraints may refer to rules defining acceptable values or relationships. For example, the constraints may include, but are not limited to, required fields, data type validation, format validation, range validation, length validation, enumerated values and referential integrity. The required fields, meaning specifying fields which must have a value. The data type validation, meaning, ensuring the input (input object-oriented entities to the validator 216) matches the defined data type (for example, attempting to enter text in an integer field would fail). The format validation, meaning, verifying that the input adheres to a specific pattern (for example, using regular expressions to validate email addresses or date formats). The range validation, meaning, checking if numerical or date values fall within acceptable minimum and maximum limits. The length validation, meaning, ensuring that input strings fall below specified lengths. The enumerated values, meaning, restricting the input to a predefined set of allowed values (for example, selecting a methodology from a dropdown list). The referential integrity, meaning, verifying the references to other data entities (for example, a user ID or a user identifier) are valid and exist within the back-end system 106.

Once the object-oriented entities are validated, the validator 216 may parse the object-oriented entities. The parsing may include extracting the values for each defined process attributes and process deliverables from the validated object-oriented entities. Thereafter, the validator 216 may apply the defined schema and constraints to the parsed input data. The validator 216 may iterate through each parsed input and verify if the parsed input satisfy all the rules in defined schema and constraints. The validation rules may be implemented as a set of conditional statements or through a dedicated validation library (for example, Drupal's Form API validation functions, FormValidation, Zod and Vine JavaScript (VineJS). Moreover, the validator 216 may implement conditional validation, where certain rules are only applied based on the values of other input fields. For example, a "risk assessment" deliverable may only require specific risk-related information if the project is classified as "high risk". Thus, adding flexibility and context-awareness to the validation process by the validator 216. In an aspect, the validator 216 may perform validation asynchronously, for complex verifications requiring interaction with other systems or databases (e.g., checking if a user ID exists). Thus, providing feedback without blocking the main thread. The plurality of process attributes and the plurality of process deliverables which successfully pass the validation by the validator 216 are subsequently transmitted to the content management module 216, for further processing.

Further, the service module 218, upon successful validation of the object-oriented entities and approval, may generate (by using the frontend module 222) the structured process creation framework for publishing the process and the plurality of process deliverables corresponding to the requested service delivery. Herein, the published process and the plurality of published process deliverables may provide common unifying language for service delivery by a plurality of service teams. Moreover, the published process and the plurality of published process deliverables may be dynamically updated and stored in the memory 202 or the data source 208 by the database handler 230 (for example, relational database (like MySQL, PostgreSQL, or SQL Server) and/or NoSQL databases), with respective index value for dynamic retrieval. Herein, the index value may refer to a data structure, which may improve the speed of data retrieval operations on the published process and the plurality of published process deliverables. Specifically, the index values are created and maintained for the specific attributes or fields which are commonly used for searching, filtering, or sorting the processes and deliverables. Different attributes may have their own indexes. For instance, an index value on the "process name" field, an index on the "deliverable type" field and/or an index on the "publication date" field. When a query comes in that includes a condition on an indexed field, the database (not shown in FIG. 2) may use the index to locate the matching records.

Moreover, on a scheduled basis, or triggered by a publication event, the service module 218 may retrieve content (the object-oriented) from the content management module 226. The retrieved content, which is stored as entities within the content management module 226, may be then serialized into JavaScript Object Notation (JSON) files. The serialization may include traversing the entity structures and the associated fields and converting them into a standardized JSON format suitable for storage and subsequent processing. The generated JSON files may be then stored within the storage accounts (not shown in FIG. 2) associated with the service module 218. The storage accounts may be scalable and durable, for instance cloud-based object storage accounts. The JSON files representing the processes and deliverables may be stored as objects within said storage accounts.

In an aspect, the service module 218 may include setting a publication status of the process and the plurality of process deliverables as a draft status for iterative validation, collaborative review, version control, and publishing workflows, prior to publishing the process and the plurality of process deliverables. During the draft status, the process and the plurality of process deliverables may undergo repeated cycles of validation. Validation rules (implemented programmatically, as discussed earlier with the rule engine) may be executed against the process and the plurality of process deliverables. Additionally, feedback from validation processes may be iteratively addressed, with the process and the plurality of process deliverables remaining unpublished until meeting the required quality standards. The draft status may enable multiple stakeholders with appropriate permissions to access and review the process and the plurality of process deliverables, prior to the publishing. Collaboration features (e.g., commenting, annotation, tracked changes, or the like) may be utilized on the draft versions of the process and the plurality of process deliverables. Maintaining the process and the plurality of process deliverables in the draft status may enable version control. Every modification to the draft may be tracked, allowing for rollback to previous versions if needed. The draft status may act as a precursor to formal publication. Once the process and the plurality of process deliverables in the draft status passes validation and review, a specific publishing workflow (which may involve approvals, scheduling, etc.) may transition the status from draft to "published".

The service module may set the publication status, by using taxonomy, variant tagging and historical usage patterns. Specifically, the process and the plurality of process deliverables may be categorized using the taxonomy (e.g., "Agile," "Waterfall"). The API may include rules to automatically set the draft status based on the taxonomy. For example, a newly created process in a specific category may default to draft. The variants of processes or deliverables may be tagged (e.g., "experimental," "in review"). The API uses the tags to ensure that the variants which are not ready for publication are set to "draft". Moreover, the service module 218 may analyze similar process and the plurality of process deliverables used in the past. If the process and the plurality of process deliverables of a certain type or with certain attributes is typically reviewed and revised before publication, the API might set new the process and the plurality of process deliverables of said type to "draft".

In further detail, the service module 218 may interact with the content management module 226 to update the state of the relevant entities, by loading the entities corresponding to the process and the plurality of process deliverables. For each loaded entity, the service module 218 may modify the value of a designated field or property which tracks the publication status. The value of the designated field or property field may be a boolean flag (e.g., is _published = FALSE) or a categorical field with defined states (e.g., publication_status = 'draft'). After modifying the publication status, the service module 218 may persist in the changes back to the underlying data store (database) using the content management module 226, thereby ensuring that the entities are saved with their new "draft" status. In essence, by setting said draft status, the service module 218 may ensures that the process and its deliverables are considered "published" or publicly accessible within the system's content delivery mechanisms only after a subsequent explicit publication action is performed.

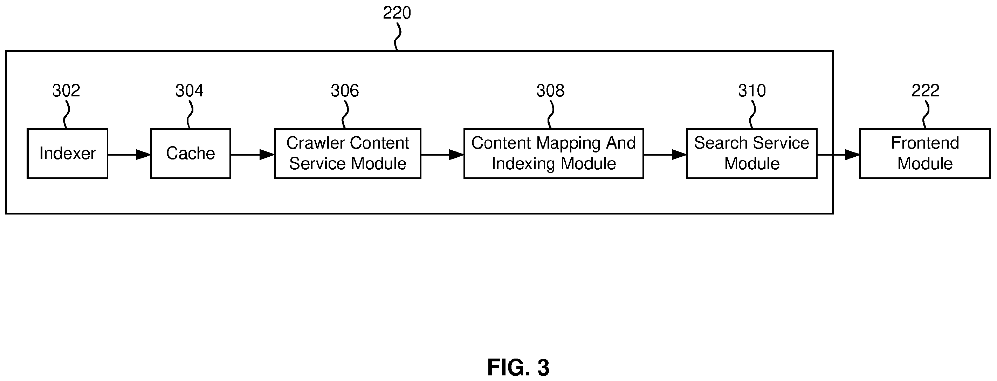

Moreover, the service module 218 may enable searching searching of the process based on the plurality of process attributes and/or based on taxonomy, variant tagging, publication status and historical usage patterns. Specifically, the service module 218 may include a crawler 220 which may read the content of the JSON files and extract the relevant information to be made searchable. The extracted information may be then used to populate the indexes associated with a plurality of indexers. The indexer values may include the searchable schema of the data. The crawler 220 is described in detail in conjunction with FIG. 3.

Furthermore, to publish the process and the plurality of process deliverables, the frontend module 222 may utilize techniques such as React JavaScript (React JS), Tailwind Cascading Style Sheets (CSS) and/or Redux Toolkit Query (RTK Query). Specifically, the React JS may serve as the core JavaScript library for building the graphical user interface (GUI) 224. React JS may encapsulate both the presentational aspects (appearance) and the behavioral logic of individual GUI 224 elements (pages, widgets, etc.). React JS, may include utilizing languages such as, virtual document object model (DOM) for efficient GUI 224 updatesThe Tailwind CSS may refer to utility-first CSS framework, utilized for styling the visual presentation of each React component. Tailwind CSS may provide a comprehensive set of pre-defined utility classes which may be applied to control aspects like layout, typography, colors, spacing, and responsiveness, thereby styling the GUI's 224 elements. The RTK Query may refer to data fetching and caching solution. The RTK Query may be utilized for handling communication between the frontend web application and the backend API. The RTK Query may define API endpoints and automatically generates React hooks, said React hooks may manage the asynchronous request lifecycle (fetching data), caching responses, and updating the GUI 224 based on the data retrieved from the backend. In essence, React JS may provide the structural and logical foundation of the GUI 224, Tailwind CSS may process the declarative styling of the GUI's 224 components, and RTK Query may manage asynchronous data interactions with the backend API to fetch and publish the process and the plurality of process deliverables within the GUI 224.

Further, for dynamic update and retrieval of published process and the plurality of published process deliverables, a database 234 schema may include tables or collections to store the published process and the plurality of published process deliverables. Each process and deliverable may be represented as a record or document in the database 234. The database 234 schema may include fields to store the attributes of the process and deliverables (e.g., name, description, status, content, etc.). The field or flag may indicate the publication status of each process and deliverable. Additionally, relationships between processes and the plurality of process deliverables may be defined in the database 234 (e.g., using foreign keys in a relational database or embedded documents in a NoSQL database). When the process or deliverable is updated, the service module 218 may modify the corresponding record(s) in the database 234. The update may be triggered by user actions (e.g., editing a process definition in the user interface) or by automated processes. For dynamic retrieval, the service module 218 may retrieve process and deliverable data from the database 234 using queries. For example, said queries may be "get the deliverable with ID 123"or "get all published deliverables for the 'Agile Software Development' process". In response to said queries the database 234 may return the most current version of the requested data.

In an aspect, the back-end system 106 may receive feedback from a plurality of stakeholders, through embedded comment workflows, configurable review cycles, and digital approval gates, prior to publishing the process and the plurality of process deliverables on the GUI 224. Also, in the back-end system 106, feedback may be integrated through collaborative content creation and review workflow within the content management module 226. The first set of inputs for a plurality of process attributes associated with the process and the second set of inputs for the plurality of process deliverables, provided by the user 114 and/or 116, may be stored as structured entities (or the entity types) and marked with the status, like draft. The user 114 and/or 116 may then review the structured entities using content moderation workflows and provide feedback through the GUI 224. Updates based on the feedback may be incorporated within the structured entities, allowing for real-time revisions without restarting the structured process creation framework. Once the feedback is implemented and approvals are complete, the content status may be programmatically updated to published, triggering API-based propagation to downstream systems. The feedback process may be supported by role-based permissions, ensuring that only authorized users 114 and/or 116 may approve or modify feedback-based changes.

In the present disclosure, the generated structured process creation framework may enable role-based access of the published process and the plurality of published process deliverables through the unified application interface tool 232. The unified application interface tool 232 may include, but not limited to, the content management module 226, the plurality of Application Programming Interfaces (APIs) 228, and the database handler 230. The structured process creation framework may provide a single point of interaction for the users114 and/or 116, and access to functionalities and data is governed by the roles assigned to the users 114 and/or 116. The roles (for example, process viewer, deliverable editor, administrator, or the like) may be defined by the back-end system 106. Each role may be associated with a specific set of permissions. The set of permissions may define the actions the user assigned to the particular role, may perform on the back-end system 106 (e.g., view a process, edit a deliverable, publish content). The users 114 and/or 116 may be assigned one or more roles. The effective permissions may be the aggregate of the permissions associated with the assigned roles. Further, the application logic may enforce the permissions. When the users 114 and/or 116 attempt to access a process or deliverable, or perform an action, the back-end system 106 may verify if the assigned role(s) grant the necessary permission to the user 114 and/or 116.

When the user 114 and/or 116 logs in (or submit the request for the service delivery) through the graphical user interface 224, the unified application interface tool 232, may verify the identity of the users 114 and/or 116 , and determine the assigned roles. Thereafter, when the user 114 and/or 116 navigates to the specific process or deliverable or attempts to perform action (e.g., view, edit, publish), the unified application interface tool 232 may perform authorization checks based on the user's 114 and/or 116 roles. The unified application interface tool 232 may dynamically render the graphical user interface 224 based on the user's 114 and/or 116 roles. For example, users 114 and/or 116 with "process viewer" role may only see read-only views, while the users 114 and/or 116 with "deliverable editor" may see edit buttons and form fields for deliverables modification. The APIs 228 may provide the necessary data, and the frontend module 222 may adapt the presentation based on the user's 114 and/or 116 authorized actions. In essence, the unified application interface tool 232 may act as the presentation layer through which users 114 and/or 116 interact with the structured process creation framework. The unified application interface tool 232 may leverage the underlying content management module 226, APIs 228, and database handler 230, while enforcing role-based access to ensure that users 114 and/or 116 can only access and manipulate the published processes and deliverables according to the assigned roles and permissions.

FIG. 3 illustrates a block diagram of the crawler 220 for searching of the process, in accordance with implementations of the present disclosure. The crawler 220 may, further, include an indexer 302, a cache 304, a crawler content service module 306, a content mapping and indexing module 308 and a search service module 310.

The indexer 302 may retrieve data (corresponding to the object-oriented entities) from the content management module 226. The retrieval may be performed programmatically, for example using Drupal's API (e.g., REST API). The indexer 302 may iterate through the data within the content management module 226 and identify the entities which are designated for search indexing. Furthermore, for each entity of the data retrieved from the content management module 226, a sitemap uniform resource locator (URL) object may be created. Specifically, for each entity identified in the content management module 226, the indexer 302 may extract the URL or path. A data structure representing said sitemap URL object may be instantiated. The sitemap URL object may include the URL and other metadata relevant for indexing (for example, last modified date, priority, or the like). Thus, a list of URLs may be created, which the indexer 302 may use to fetch the data from the content management module 226. The indexer 302 may generate the sitemap URL object for all the entities in the content management module 226, by iterating through all the data in the content management module 226 which requires to be indexed. In an aspect, a loop or a control structure may be utilized to ensure that the sitemap URL object is created for every relevant data. After that, the generated sitemap URL objects may be stored in a cache 304. The cache 304 may be an in-memory cache (e.g., Redis, or an in-process cache) to provide fast access to the URLs in the subsequent steps. Furthermore, the crawler content service module 306 may retrieve the sitemap URL objects from the cache 304. The crawler content service module 306 may implement the caching mechanism and retrieves the stored list of the sitemap URL objects. Additionally, the crawler content service module 306 may retrieve the content corresponding to each URL in the sitemap URL object. The crawler content service module 306 may iterate through the sitemap URL objects retrieved from the cache.

In further detail, the crawler content service module 306 may utilize a strategy pattern to retrieve the content. The strategy pattern may be based on the process. For example, the process "GetContentByUrl" may determine the appropriate strategy to use. Strategies may be matched based on the URL. Different URLs may require different strategy pattern to retrieve the content. In an aspect, the crawler content service module 306 may utilize an interface (for example, IcrawlableContentGenerationStrategy) to define the contract for said strategy patterns. If the strategy matches the URL, the "GenerateContentAsync" process may be called. In other words, the "GenerateContentAsync" process connects to the content management module 226, retrieves the content, transforms it into a crawlable content object, and returns the crawlable content object. Thereafter, the content mapping and indexing module 308 may map the crawlable content object to a search-specific format and then add to the search index. Specifically, the crawlable content object may be transformed into a format aligning with the schema of the search index. The transformation may include mapping fields from the crawlable content object to fields in the search index. The transformed crawlable content objects may be then added to the search index.

Further, by utilizing the transformed crawlable content the search service module 310 may create one or more indexes (e.g., index values). The one or more indexes may define the fields which will be searchable. Specifically, the one or more indexes may be created and configured to connect to the data sources (not shown in FIG. 3) and subsequently, populate the indexes. The search service module 310 may define mapping between the data sources and the index fields. Furthermore, the search service module 310 may create index alias pointing to the index. Herein, the index alias may provide an abstraction layer, to mask the actual name of the index. Thus, index updates and maintenance may be enabled. Consequently, the URL for accessing the search data is provided to the frontend module 222. Specifically, the URL or endpoint for querying the search service module 310 (using the index alias) may be provided to the frontend module 222.

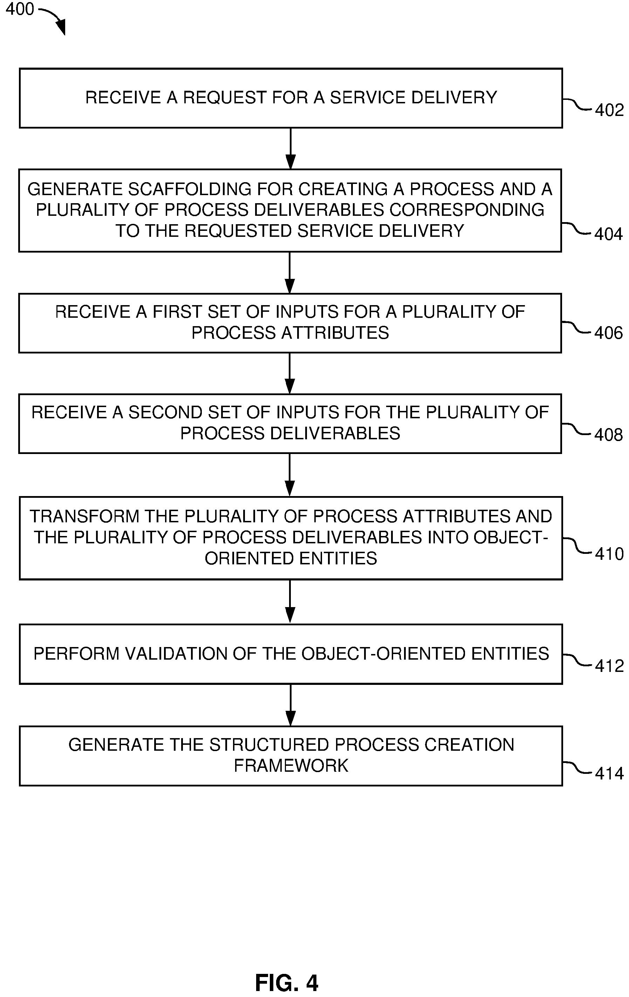

FIG. 4 illustrates a flow diagram of an example computer-implemented method 400 for generating the structured process creation framework, by the back-end system 106, in accordance with implementations of the present disclosure. In some examples, the computer-implemented method 400 may be executed using the one or more hardware processors 204 disclosed in related to FIGS. 1-3.

The computer-implemented method 400 may include receiving 402 the request for the service delivery. The service delivery may refer to the end-to-end process of providing a specific service to the user 114 and/or 116 or another system. The service delivery may encompass all the activities, resources, and interactions involved in making the service accessible, usable, and fulfilling the intended purpose.

The computer-implemented method 400 may include generating 404 scaffolding, by using predefined templates and structured metadata models. The scaffolding may include the structured foundation for creating the process and the plurality of process deliverables.

The computer-implemented method 400 may include receiving 406 the first set of inputs for a plurality of process attributes associated with the process. Herein, the plurality of process attributes may include the process name, the list of process variants, one or more input parameters or arguments of the process, one or more output parameter or deliverable of the process, the set of key considerations, the set of key performance indices, and/or the set of metrics.

The computer-implemented method 400 may include receiving 408 the second set of inputs for the plurality of process deliverables. Herein, the plurality of process deliverables may include the deliverable name, the list of deliverable variants, the purpose or the reason of the deliverable, risk and/or mitigation technique corresponding to the deliverable, the set of key performance indices associated with the deliverable, the set of metrics associated with the deliverable, the asset of the tool associated with the deliverable, one or more templates associated with the deliverable, and/or one or more examples corresponding to the deliverable.

The computer-implemented method 400 may include transforming 410 the plurality of process attributes and the plurality of process deliverables into object-oriented entities. The transformation into the object-oriented entities may include defining entity type, creating an instance of the entity type and mapping the first set of inputs and the second set of inputs to the entity type.

The computer-implemented method 400 may include performing 412 validation of the object-oriented entities, by using rule-based engines and content workflows. The validation may be performed for data integrity checks on the object-oriented entities, thereby maintaining data quality, consistency, and preventing errors in the generated scaffolding.

The computer-implemented method 400 may include generating 414, based upon successful validation of the object-oriented entities and approval, the structured process creation framework for publishing the process and the plurality of process deliverables corresponding to the requested service delivery. Herein, the published process and the plurality of published process deliverables may provide common unifying language for service delivery by the plurality of service teams. The published process and the plurality of published process deliverables may be dynamically updated and stored for dynamic retrieval. Moreover, the publication status of the process and the plurality of process deliverables, may be set as the draft status prior to publishing the process and the plurality of process deliverables. Furthermore, searching of the process based on the plurality of process attributes and/or based on a publication status of the process may be enabled. Additionally, the structured process creation framework may integrate plurality of content management module 226 and a plurality of service module 218 and may provide a single frontend application for the structured process creation framework.

Implementation of the present disclosure provide technical advancements in the context of managing multiple methodologies. Implementations of the present disclosure enable generation of the structured process creation framework for managing processes or methodologies and process deliverables associated with each of the processes. For instance, the disclosed method and system may facilitate the generation of the process and the plurality of process deliverables by integrating real-time collaboration, intelligent scaffolding, and streamlined review cycles. The one or more templates associated with the deliverable may ensure consistent formatting and structure.

Moreover, the present disclosure may provide the common unifying language for service delivery by a plurality of service teams. The common unifying language may consolidate multiple methodologies into a single, structured platform. The common unifying language may integrate existing methodologies with industry standards to enable cross-service delivery. The structured process creation framework may integrate a plurality of content management modules 226 for centralized content management, ensuring real-time updates and global standardization. Additionally, the structured process creation framework in the present innovation is a real-time, structured framework that enables content inheritance, ensuring method reusability. The process and the plurality of process deliverables may be modelled as object-oriented entities, stored in the content management module 226 for dynamic retrieval. The present innovation may further enable searching of the process (implemented by crawler 220), with fast, AI-driven content discovery including intelligent filtering and ranking.

Furthermore, the present innovation provides a structured, modular framework which ensures uniformity by defining standardized method hierarchies, deliverable templates, and process linkages within the content management module 226. The variant-based method creation, built on the content management module's entity-based content modelling, automates content generation by leveraging configurable content types, reusable taxonomies, and structured metadata. Thus, ensuring consistency while allowing dynamic customization for different engagements, enabling scalability and governance enforcement across diverse methodologies.

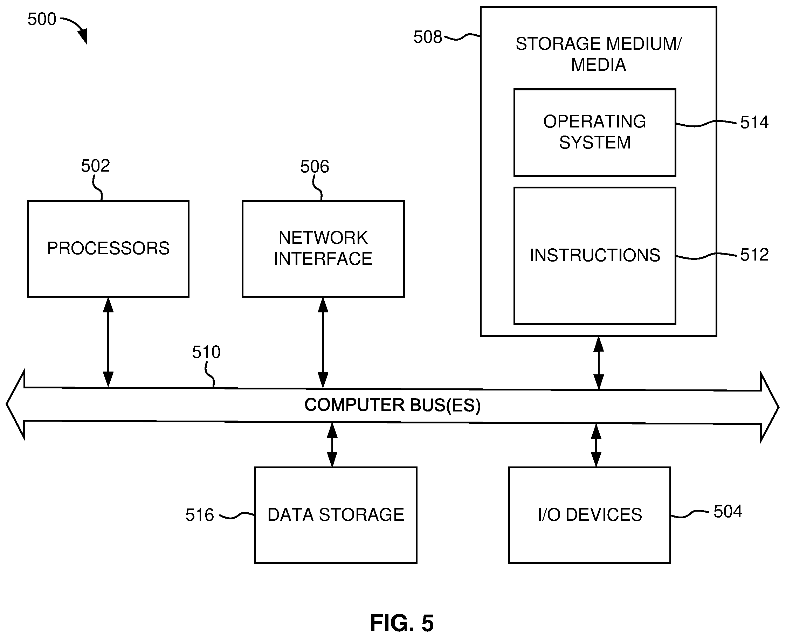

FIG. 5 illustrates a computer system 500 that may be used to implement the back-end system 106 disclosed in the example environment of FIG. 1. for generating the structured process creation framework, in accordance with implementations of the present disclosure. More particularly, computing machines such as desktops, laptops, smartphones, tablets, and wearables which may be used to implement the tasks that may have the structure of the computer system 500. The computer system 500 may include additional components not shown and that some of the process components described may be removed and/or modified. In another example, a computer system 500 may be deployed on external-cloud platforms such as cloud, internal corporate cloud computing clusters, organizational computing resources, and/or the like.

The computer system 500 includes processor(s) 502, such as a central processing unit, ASIC or another type of processing circuit, input/output devices 504, such as a display, mouse keyboard, etc., a network interface 506, such as a Local Area Network (LAN), a wireless 802.11x LAN, a 3G or 4G mobile WAN or a WiMax WAN, and a computer-readable medium 508. Each of these components may be operatively coupled to a bus 510. The computer-readable medium 508 may be any suitable medium that participates in providing instructions to the processor(s) 502 for execution. For example, the computer-readable medium 508 may be non-transitory or non-volatile medium, such as a magnetic disk or solid-state non-volatile memory or volatile medium such as RAM. The instructions or modules stored on the computer-readable medium 508 may include machine-readable instructions 512 executed by the processor(s) 502 that cause the processor(s) 502 to perform the methods and functions of the system for generating the structured process creation framework.

The system may be implemented as software stored on a non-transitory processor-readable medium and executed by the processors 502. For example, the computer-readable medium 508 may store an operating system 514, such as MAC OS, MS WINDOWS, UNIX, or LINUX, and code for the system. The operating system 514 may be multi-user, multiprocessing, multitasking, multithreading, real-time, and the like. For example, during runtime, the operating system 514 is running and the code for the system is executed by the processor(s) 502.

The computer system 500 may include a data storage 516, which may include non-volatile data storage. The data storage 516 stores any data used or generated by the system.

The network interface 506 connects the computer system 500 to internal systems for example, via a LAN. Also, the network interface 506 may connect the computer system 500 to the Internet. For example, the computer system 500 may connect to web browsers and other external applications and systems via the network interface 506.

What has been described and illustrated herein is an example along with some of its variations. The terms, descriptions, and figures used herein are set forth by way of illustration only and are not meant as limitations. Many variations are possible within the spirit and scope of the subject matter, which is intended to be defined by the following claims and their equivalents.

Implementations and all of the functional operations described in this specification may be realized in digital electronic circuitry, or in computer software, firmware, or hardware, including the structures disclosed in this specification and their structural equivalents, or in combinations of one or more of them. Implementations may be realized as one or more computer program products (i.e., one or more modules of computer program instructions encoded on a computer readable medium for execution by, or to control the operation of, data processing apparatus). The computer readable medium may be a machine-readable storage device, a machine-readable storage substrate, a memory device, a composition of matter effecting a machine-readable propagated signal, or a combination of one or more of them. The term computing system encompasses all apparatus, devices, and machines for processing data, including by way of example a programmable processor, a computer, or multiple processors or computers. The apparatus may include, in addition to hardware, code that creates an execution environment for the computer program in question (e.g., code that constitutes processor firmware, a protocol stack, a database management system, an operating system, or any appropriate combination of one or more thereof). A propagated signal is an artificially generated signal (e.g., a machine-generated electrical, optical, or electromagnetic signal) that is generated to encode information for transmission to suitable receiver apparatus.

A computer program (also known as a program, software, software application, script, or code) may be written in any appropriate form of programming language, including compiled or interpreted languages, and it may be deployed in any appropriate form, including as a stand-alone program or as a module, component, subroutine, or other unit suitable for use in a computing environment. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and apparatus may also be implemented as, special purpose logic circuitry (e.g., an FPGA (field programmable gate array) or an ASIC (application specific integrated circuit)).

Processors suitable for the execution of a computer program include, by way of example, both general and special purpose microprocessors, and any one or more processors of any appropriate kind of digital computer. Generally, a processor will receive instructions and data from a read only memory or a random-access memory or both. Elements of a computer can include a processor for performing instructions and one or more memory devices for storing instructions and data. Generally, a computer will also include or be operatively coupled to receive data from or transfer data to, or both, one or more mass storage devices for storing data (e.g., magnetic, magneto optical disks, or optical disks). However, a computer need not have such devices. Moreover, a computer may be embedded in another device (e.g., a mobile telephone, a personal digital assistant

(PDA), a mobile audio player, a Global Positioning System (GPS) receiver). Computer readable media suitable for storing computer program instructions and data include all forms of non-volatile memory, media and memory devices, including by way of example semiconductor memory devices (e.g., EPROM, EEPROM, and flash memory devices); magnetic disks (e.g., internal hard disks or removable disks); magneto optical disks; and CD ROM and DVD-ROM disks. The processor and the memory may be supplemented by, or incorporated in, special purpose logic circuitry.

To provide for interaction with a user, implementations may be realized on a computer having a display device (e.g., a CRT (cathode ray tube), LCD (liquid crystal display) monitor) for displaying information to the user and a keyboard and a pointing device (e.g., a mouse, a trackball, a touchpad), by which the user may provide input to the computer. Other kinds of devices may be used to provide for interaction with a user as well; for example, feedback provided to the user may be any appropriate form of sensory feedback (e.g., visual feedback, auditory feedback, tactile feedback); and input from the user may be received in any appropriate form, including acoustic, speech, or tactile input.

Implementations may be realized in a computing system that includes a back end component (e.g., as a data server), a middleware component (e.g., an application server), and/or a front end component (e.g., a client computer having a graphical user interface or a Web browser, through which a user may interact with an implementation), or any appropriate combination of one or more such back end, middleware, or front end components. The components of the system may be interconnected by any appropriate form or medium of digital data communication (e.g., a communication network). Examples of communication networks include a local area network (LAN) and a wide area network (WAN), e.g., the Internet.

The computing system may include clients and servers. A client and server are generally remote from each other and typically interact through a communication network. The relationship of client and server arises by virtue of computer programs running on the respective computers and having a client-server relationship to each other.

While this specification contains many specifics, these should not be construed as limitations on the scope of the disclosure or of what may be claimed, but rather as descriptions of features specific to particular implementations. Certain features that are described in this specification in the context of separate implementations may also be implemented in combination in a single implementation. Conversely, various features that are described in the context of a single implementation may also be implemented in multiple implementations separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products.

A number of implementations have been described. Nevertheless, it will be understood that various modifications may be made without departing from the spirit and scope of the disclosure. For example, various forms of the flows shown above may be used, with steps reordered, added, or removed. Accordingly, other implementations are within the scope of the following claims.

## Claims

1. A computer-implemented method for generating a structured process creation framework, the computer-implemented method comprising:
receiving a request for a service delivery;
generating, by using predefined templates and structured metadata models, scaffolding including a structured foundation for creating a process and a plurality of process deliverables corresponding to the requested service delivery;
receiving a first set of inputs for a plurality of process attributes associated with the process;
receiving a second set of inputs for the plurality of process deliverables;
transforming the plurality of process attributes and the plurality of process deliverables into object-oriented entities;
performing, by using rule-based engines and content workflow, validation of the object-oriented entities; and
generating, based upon successful validation of the object-oriented entities and approval, the structured process creation framework for publishing the process and the plurality of process deliverables corresponding to the requested service delivery, wherein the published process and the plurality of published process deliverables provide common unifying language for the requested service delivery, wherein the published process and the plurality of published process deliverables are dynamically updated and stored with respective index values for dynamic retrieval.

2. The computer-implemented method of claim 1, wherein the plurality of process attributes comprises a process name, a list of process variants, one or more input parameters or arguments of the process, at least one output parameter or deliverable of the process, a set of key considerations, a set of key performance indices, and/or a set of metrics.

3. The computer-implemented method of claim 1, wherein the plurality of process deliverables comprises a deliverable name, a list of deliverable variants, a purpose or a reason of a deliverable, any risk and/or mitigation technique corresponding to the deliverable, a set of key performance indices associated with the deliverable, a set of metrics associated with the deliverable, an asset of a tool associated with the deliverable, one or more templates associated with the deliverable, and/or one or more examples corresponding to the deliverable.

4. The computer-implemented method of claim 1, further comprising setting a publication status of the process and the plurality of process deliverables as a draft status for iterative validation, collaborative review, version control, and publishing workflows.

5. The computer-implemented method of claim 1, further comprising enabling searching of the process based on the plurality of process attributes and/or based on taxonomy, variant tagging, publication status and historical usage patterns and/or receiving feedback from a plurality of stakeholders through embedded comment workflows, configurable review cycles, and digital approval gates, prior to publishing the process and the plurality of process deliverables.

6. The computer-implemented method of claim 1, wherein the structured process creation framework enables role-based accessing of the published process and the plurality of published process deliverables through a unified application interface tool including at least one of a content management module, a plurality of service modules, and a database handler.

7. An application server for generating a structured process creation framework, the application server comprising:
at least one memory configured to store machine-executable instructions; and
at least one processor communicatively coupled with the at least one memory, and configured to execute the machine-executable instructions to perform operations comprising:
receiving a request for a service delivery;
generating, by using predefined templates and structured metadata models, scaffolding including a structured foundation for creating a process and a plurality of process deliverables corresponding to the requested service delivery;
receiving a first set of inputs for a plurality of process attributes associated with the process;
receiving a second set of inputs for the plurality of process deliverables;
transforming the plurality of process attributes and the plurality of process deliverables into object-oriented entities;
performing, by using rule-based engines and content workflow, validation of the object-oriented entities; and
generating, based upon successful validation of the object-oriented entities and approval, the structured process creation framework for publishing the process and the plurality of process deliverables, corresponding to the requested service delivery, wherein the published process and the plurality of published process deliverables are dynamically updated and stored with respective index values for dynamic retrieval.

8. The application server of claim 7, wherein the plurality of process attributes comprises a process name, a list of process variants, one or more input parameters or arguments of the process, at least one output parameter or deliverable of the process, a set of key considerations, a set of key performance indices, and/or a set of metrics.

9. The application server of claim 7, wherein the plurality of process deliverables comprises a deliverable name, a list of deliverable variants, a purpose or a reason of a deliverable, any risk and/or mitigation technique corresponding to the deliverable, a set of key performance indices associated with the deliverable, a set of metrics associated with the deliverable, an asset of a tool associated with the deliverable, one or more templates associated with the deliverable, and/or one or more examples corresponding to the deliverable.

10. The application server of claim 7, wherein the operations further comprise setting a publication status of the process and the plurality of process deliverables as a draft status prior to publishing the process and the plurality of process deliverables and/or enabling searching of the process based on the plurality of process attributes and/or based on taxonomy, variant tagging, publication status and historical usage patterns and/or receiving feedback from a plurality of stakeholders through embedded comment workflows, configurable review cycles, and digital approval gates, prior to publishing the process and the plurality of process deliverables.

11. The application server of claim 7, wherein the structured process creation framework integrates a plurality of content management module and a plurality of service modules and a database handler.

12. At least one non-transitory computer-readable medium (CRM) comprising machine-executable instructions, which when executed by at least one processor of an application server configured for generating a structured process creation framework, cause the application server to perform operations comprising:
receiving a request for a service delivery;
generating, by using predefined templates and structured metadata models, scaffolding including a structured foundation for creating a process and a plurality of process deliverables corresponding to the requested service delivery;
receiving a first set of inputs for a plurality of process attributes associated with the process;
receiving a second set of inputs for the plurality of process deliverables;
transforming the plurality of process attributes and the plurality of process deliverables into object-oriented entities;
performing, by using rule-based engines and content workflow, validation of the object-oriented entities; and
generating, based upon successful validation of the object-oriented entities and approval, the structured process creation framework for publishing the process and the plurality of process deliverables, corresponding to the requested service delivery, wherein the published process and the plurality of published process deliverables are dynamically updated and stored with respective index values for dynamic retrieval.

13. The at least one non-transitory CRM of claim 12, wherein:
the plurality of process attributes comprises a process name, a list of process variants, one or more input parameters or arguments of the process, at least one output parameter or deliverable of the process, a set of key considerations, a set of key performance indices, and/or a set of metrics; and
the plurality of process deliverables comprises a deliverable name, a list of deliverable variants, a purpose or a reason of a deliverable, any risk and/or mitigation technique corresponding to the deliverable, a set of key performance indices associated with the deliverable, a set of metrics associated with the deliverable, an asset of a tool associated with the deliverable, one or more templates associated with the deliverable, and/or one or more examples corresponding to the deliverable.

14. The at least one non-transitory CRM of claim 12, wherein the operations further comprise setting a publication status of the process and the plurality of process deliverables as a draft status prior to publishing the process and the plurality of process deliverables, and/or enabling searching of the process based on the plurality of process attributes and/or based on taxonomy, variant tagging, publication status and historical usage patterns, and/or receiving feedback from a plurality of stakeholders through embedded comment workflows, configurable review cycles, and digital approval gates, prior to publishing the process and the plurality of process deliverables.

15. The at least one non-transitory CRM of claim 12, wherein the structured process creation framework integrates a plurality of content management module and a plurality of service modules and a database handler.
